# EUROPEAN PATENT SPECIFICATION

(11) **EP 3 203 872 B1**
(45) Date of publication and mention of the grant of the patent: **02.01.2019**
(21) Application number: 15781315.5
(22) Date of filing: 02.10.2015
(51) Int. Cl.: A45D 34/04, A45D 34/00, B65D 47/18, B65D 51/32

(54) **DEVICE FOR PACKAGING AND APPLICATION BY MEANS OF A PIPETTE**
VORRICHTUNG ZUR VERPACKUNG UND VERWENDUNG MITTELS EINER PIPETTE
DISPOSITIF DE CONDITIONNEMENT ET D'APPLICATION AU MOYEN D'UNE PIPETTE

(30) Priority: 06.10.2014 FR 1459555
(43) Date of publication of application: 16.08.2017
(73) Proprietor: L'OREAL, 75008 Paris (FR)
(72) Inventor: DRUGEON, Lionel, 92250 La Garenne Colombes (FR); LEBRAND, Jean-Marc, 93500 Pantin (FR)
(74) Representative: Jouanneau, Lionel
(86) International application number: PCT/EP2015/072870
(87) International publication number: WO 2016/055388

(56) References cited:
- EP-A1- 2 749 187
- FR-A1- 2 964 953
- KR-B1- 101 162 644

## Description

The subject of the present invention is a device for packaging and dispensing a fluid composition by means of a pipette. The invention is used more particularly in the field of devices for packaging cosmetic products, in which the product has to be delivered in the form of doses.

The expression "cosmetic product" is understood to mean any product as defined in Regulation (EC) No 1223/2009 of the European Parliament and of the Council of 30 November 2009 on cosmetic products.

In the prior art, the teaching of document EP0248345 discloses a packaging and application device having a container and a closure member, the closure member being equipped with a pipette provided at its dispensing end with an applicator member such as a brush. This device teaches pulling on a piston located in the pipette in order to fill the latter with a dose of product, and, in a second stage, unscrewing the closure member so as to allow this dose to be applied. The user of such a device is faced with the problem of having to carry out two successive manipulations, firstly pulling on the piston and then unscrewing.

A packaging and application device that makes it possible, with one and the same hand movement, both to detach the closure member in relation to the container and to fill a tubular portion firmly attached to the closure member is known from the teaching of document FR2924696. The product is retained in this tubular portion by capillary action. This type of device is also problematic inasmuch as it only allows tiny quantities of product to be filled, and it is necessary to return the closure member to its completely closed position in order to refill the tubular portion. Furthermore, this device also only allows tiny doses to be dispensed by capillary action with the substrate on which they will be deposited.

Document FR2549015 describes a packaging and application device having a container and a closure member equipped with a pipette and a mechanism for pumping via a push button. This device teaches pressing on the push button and then releasing it in order to suck up a dose of product when the push button returns to its position under the effect of an elastic member, and, in a second stage, unscrewing the closure member in order to allow this dose to be applied. The user of such a device is faced with the problem of having to carry out two successive manipulations, firstly pulling on the piston and then unscrewing. In addition, a large number of parts is necessary to produce this device, making it expensive.

Finally, document FR2964953 describes a packaging and application device having a container and a closure member equipped with a pipette and a mechanism for pumping via a push button. The mechanism is complex and makes use of numerous elements in order that the action of screwing and unscrewing the closure member brings about the expulsion and the sucking up of a dose of product into the pipette, respectively.

There is thus a need for packaging and application devices for withdrawing at least one dose without requiring specific hand movements on the part of the user during the opening of its container. Moreover, there is a need for such devices to have a simple design and thus to be inexpensive.

The object of the present invention is thus to provide an improved device for packaging a cosmetic product in order to alleviate the abovementioned drawbacks.

To this end, the invention proposes a packaging and dispensing device having a container intended to contain a fluid product, and a closure member for closing the container, the closure member having both an application pipette designed to be inserted into the container in order to withdraw at least one dose of fluid product contained in the container, and also at least one pumping means, in particular a piston pump, connected to a push button for sucking up or expelling a dose of product contained in the pipette.

The invention advantageously provides a simple packaging device having a closure mechanism composed of a limited number of parts.

In addition, the user does not have to carry out excessive manipulations: simply opening the packaging device provides access to a pipette already filled with product.

Also, any accidental actuation and excessive filling of the pipette when the device is in the closed position are avoided.

According to further features of the invention, the push button has a complementary thread that engages with a thread on the container.

According to further features of the invention, the portion of the push button having the complementary thread may be formed by at least one tab that extends from a bearing wall of the push button in the direction of the container.

The closure member may have a cover element in which the push button is mounted so as to slide without rotating with respect to the cover element, such that the rotation of the cover element of the closure member relative to the container causes the axial translational movement of the push button relative to the cover element.

The material of which the push button is made may be more rigid than the material of which the cover element is made.

The push button may have a piston and the cover element may have a pump body, the piston being mounted so as to slide and in a leaktight manner with respect to the pump body.

The pump body and the cover element may be made from the same material.

The push button and the piston may be made from the same material.

The device may have a spring positioned between the push button and the cover element so as to exert a force that tends to move these two parts away from one another.

The invention will be understood better from reading the following description of non-limiting implementation examples thereof with reference to the appended drawings, in which:
- Figure 1 shows an example of a packaging device according to the invention;
- Figure 2 shows an exploded view of the device from Figure 1;
- Figure 3 shows a longitudinal sectional view of the closure element from the exploded view in Figure 2;
- Figure 4 shows a sectional view of the closure element from the exploded view in Figure 2 on a section plane perpendicular to the section plane in Figure 3;
- Figures 5 to 7 show partial longitudinal sectional views of the device from Figure 1 in various positions of the closure element.

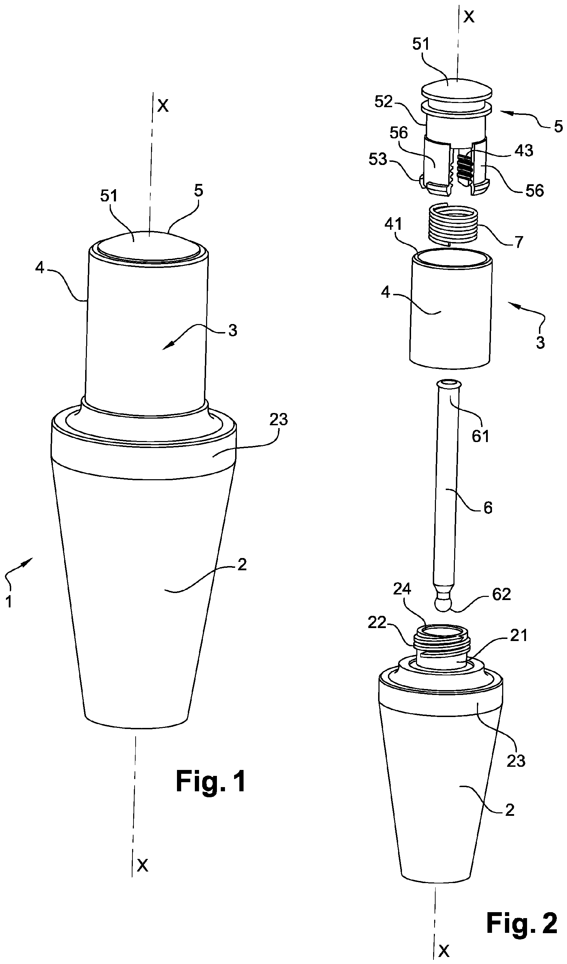

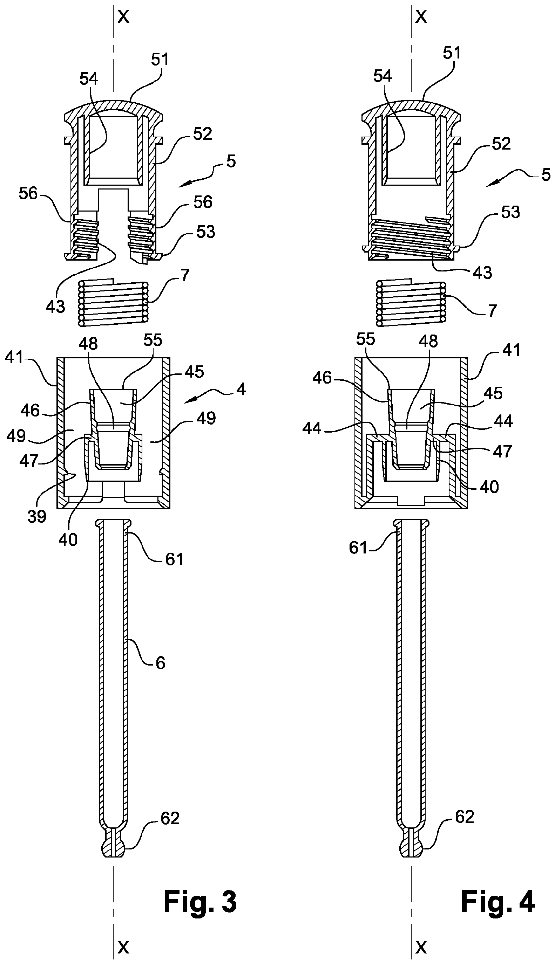

With reference to Figures 1 to 4, a device 1 for packaging and dispensing a product is shown. The product contained is preferably a cosmetic product such as a care serum or cream or a foundation. The product is in the form of a fluid, preferably a liquid. The device 1 has a container 2 for containing and storing the product before it is sold and then during its useful life with a user.

In order to preserve the product contained, the container is closed off by a closure member 3. The closure member 3 has an outer casing 4 and a push button 5. The push button 5 is in the retracted position in Figure 1. It protrudes very little axially, along a longitudinal axis X, relative to the outer casing 4. In a variant, in this retracted position, it could be concealed entirely in the outer casing 4.

The container 2 is a hollow body that is closed at one end by a base, and is open at the other end. The opening in the container 2 is defined by a neck 21 of circular section that extends from a shoulder of the container 2. The axis of the opening is a longitudinal axis X-X which, in this example, is also the axis along which the hollow body forming the container 2 mainly extends.

In the rest of the description, the terms "upper" and "lower" will be understood with respect to the main longitudinal axis X-X when the container is resting on its base and the closure member is in the closed position on the container.

The neck 21 has a means for securing the closure member 3, for example a thread 22 that projects radially from the outer wall of the neck 21.

The container 2 is produced for example from glass, or from a thermoplastic material. It may be obtained, for example, by an extrusion blow-moulding technique. It may also be obtained by joining together a number of components. It has, for example, a circular or ovoid cross section. The container 2 may be topped by a cover band 23 in order to ensure the appearance and overall design of the device 1. This cover band 23 may be produced from a different material in order to create a material or colour contrast with at least one of the container 2 and the outer casing 4. In particular, the outer casing 4 is flush with one edge of the band 23 in the closed position. The band 23 may define the neck 21.

The closure member 3 has a cover element 4, a push button 5, a pumping mechanism, and an application pipette 6.

The cover element 4 has a sleeve 41 forming a tubular external casing that serves as an element for gripping the closure member 3 in particular in order to separate it from the container 2. In a variant, for aesthetic reasons, a sheath can be added around the sleeve in order to conceal it. This sheath may be produced for example from metal or thermoplastic material, it being possible for the latter to be metallized at its surface.

The pumping mechanism has a pump body 45 formed by a tubular jacket 46 which is open at its upper end and closed at its lower end by a closure wall 47 comprising an orifice 48 at its centre. The outside diameter of the jacket 46 that forms the pump body 45 is smaller than the outside diameter of the neck 21 of the container 2.

The pump body 45 is connected to the inner wall of the sleeve 41 by at least two material bridges 44. The material bridges 44 take the form here of two webs transverse to the axis X-X. These two webs are radially opposite one another about the tubular jacket 46 of the pump body 45, thus forming openings 49 on either side of the material bridges 44 and between the tubular jacket 46 of the pump body 45 and the inner wall of the sleeve 41. These openings 49 are positioned adjacent to the thread 22 on the neck 21 of the container 2 when the closure member 3 is in the closed position.

A sealing skirt 40 having an outside diameter approximately equal to the inside diameter of the neck 21 of the container 2 extends from the closure wall 47 of the pump body 45 so as to be inserted into the neck 21 of the container 2 in order to form a leaktight contact with the inner face of the neck 21 when the closure member 3 is in the closed position.

The application pipette 6 is a tubular hollow body extending along the axis X-X and opening out at an upper end 61 through the orifice 48 in the wall 47 closing the lower part of the pump body 45. On the other side, the free end 62 of the pipette 6 opens out into the container 2 when the closure member 3 is in the closed position. The inside diameter of the pipette 6 is smaller than the inside diameter of the pump body 45, for example the inside diameter of the pipette 6 is two times smaller than the inside diameter of the pump body 45.

The free end 62 of the pipette 6 may form a constriction with respect to the internal cross section of the pipette 6 in order to limit the flow under gravity of the fluid which has been pumped. The constriction makes it possible to retain the product by capillary action. This constriction also allows more precise application of the product.

The upper end 61 is attached to the wall 47. The pipette 6 is, for example, held by snap-fastening on the wall 47 that closes the lower part of the pump body 45. It may be produced for example from glass or a thermoplastic material.

Alternatively, the pipette 6 may be made from the same material as the pump body 45 and the cover element 4 in order to form a one-piece assembly. This assembly may be produced for example from a thermoplastic material such as polypropylene (PP), polyoxymethylene (POM), high-density polyethylene (HDPE), polyethylene terephthalate (PET), glycol-modified polycyclohexylenedimethylene terephthalate (PCTG), or acrylonitrile butadiene styrene (ABS). Thus, this assembly may be produced by injection-moulding a thermoplastic material in a single injection-moulding step.

The push button 5 has an upper plate forming a bearing surface 51, allowing the user to actuate the push button 5 by pressure.

The push button 5 is mounted so as to slide in the cover element 4. To this end, the push button 5 has an outer skirt 52 extending from the perimeter of the bearing surface 51 into the cover element 4. The outer skirt 52 of the push button 5 has at least one outer bulge 53 which is snap-fastened under a protuberance 39 or a housing on the inner face of the sleeve 41 of the cover element 4. The bulge 53 is situated for example at one axial end of the skirt 52.

The contact between the bulge 53 and the protuberance 39 makes it possible to limit the axial mobility of the push button 5 inside the cover element 4. In this position of contact, in which the push button 5 is in its highest position with respect to the cover element 4, the push button 5 protrudes by a few millimetres along the longitudinal axis X-X, relative to the upper end of the sleeve 41. If a user pushes the push button 5 so as to push it back inside the cover element 4, the push button 5 will slide inside the sleeve 41.

The push button 5 also has a piston 54 formed by an inner tube extending inside the outer skirt 52 from the bearing surface 51 to the tubular jacket 46 of the pump body 54, such that the tubular jacket 46 is inserted into the piston 54. To this end, the diameter of the inner tube forming the piston 54 is approximately equal to the outside diameter of the tubular jacket 46 of the pump body 45 so as to form a piston 54 that slides about this jacket 46. In order to form a contact which is sufficiently leaktight and able to slide in the inner tube of the piston 54, the end of the pump body 45 narrows and flares in its upper part in order to form a flexible lip 55 that provides a leaktight annular contact with the internal perimeter of the inner tube of the piston 54.

The tubular jacket 46 of the pump body 45 closed by the piston 54 thus forms a chamber with a volume that varies with the sliding of the piston 54. Thus, the movement of the push button 5 relative to the cover element 4 allows pumping by sucking up the product into the pipette 6 when the free end 62 of the pipette 6 is dipped into the product and when the movement of the piston 54 in the pump body 45 causes an increase in the volume of the chamber. By contrast, sliding of the piston 54 in the opposite direction causes a decrease in the volume of the chamber and allows the product situated in the pipette 6 to be expelled.

In a variant that is not shown, the pumping mechanism could be realized in some other way, in particular, conversely to the mechanism shown, the piston 54 could be inserted into the pump body 45. Other mechanisms are also conceivable, such as the use of a membrane that is deformable with the movement of the push button so as to bring about suction or expulsion of the product in the pipette.

The push button 5 also has at least two tabs 56 extending axially from the outer skirt 52. At their lower end and on their inner face, the tabs 56 have a complementary thread 43 that is intended to engage with the thread 22 provided on the neck of the container 2. These tabs 56 pass through openings 49 situated between the material bridges 44, the tubular jacket 46 of the pump body 45 and the sleeve 41. Thus, the free ends of the tabs 56 are positioned between the sleeve 41 and the pipette 6 and can come into contact with the thread 22 on the neck 21 of the container 2 when the closure member 3 is engaged on the container 2.

The length of the tabs 56 is designed so that the piston 54 is in the low position when the closure member 3 is in the position in which it is fully screwed onto the container 2.

The push button 5 is produced from a relatively rigid plastics material such as polyethylene (PE), polypropylene (PP), polyoxymethylene (POM) or polybutylene terephthalate (PBT), for example. Advantageously, the material of which the push button 5 is made is more rigid than that used to produce the cover element 4. This makes it possible to obtain good leaktightness between these two parts, in particular while the piston 54 slides about the pump body 45, while ensuring sufficient rigidity and strength of the tabs bearing the complementary thread 43 of the push button 5.

Advantageously, the piston 54 is made from the same material as the push button 5 in order to form a one-piece assembly. Thus, this assembly may be produced by injection-moulding a thermoplastic material in a single injection-moulding step.

Alternatively, a seal can be added to the pumping mechanism, this assembly then being produced in at least two parts.

A spring 7, for example of the helical spring type, is positioned between the push button 5 and the cover element 4 so as to exert a force of axis X-X that tends to move these two parts away from one another. More specifically, the spring is compressed, bearing both against the material bridges 44 of the cover element 4 and against the inner face of the upper plate forming the bearing surface 51 of the push button 5.

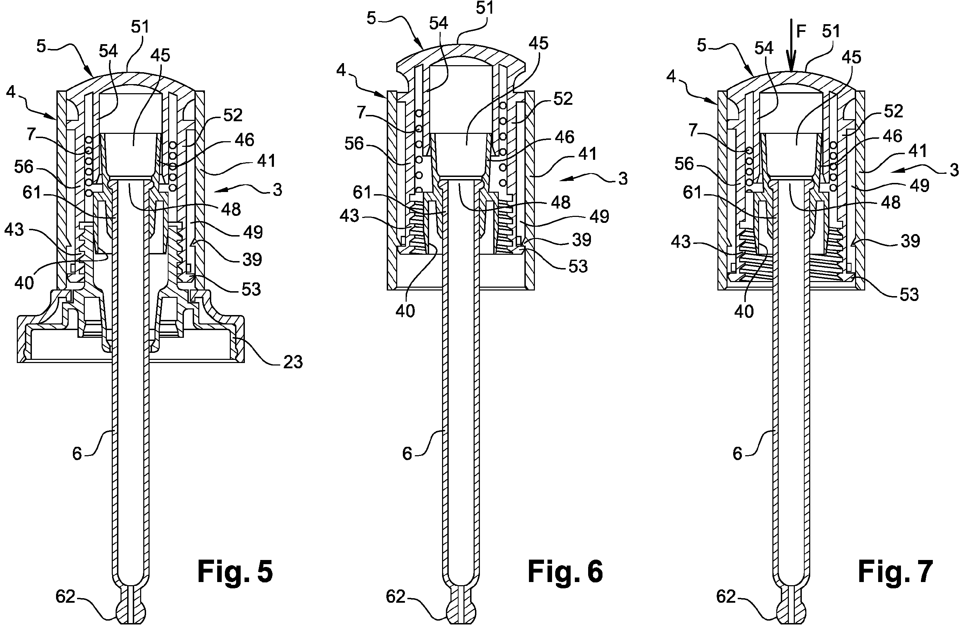

The manner in which the invention functions will now be described with reference to Figures 5 to 7.

In Figure 5, the closure member 3 is in the closed position on the container. The push button 5 is in the fully depressed position since the fins 56 have been screwed entirely onto the neck 21 of the container. In addition, under the effect of the force of the spring 7, the cover element 4 is likewise pressed against the shoulder of the container.

When the user wishes to remove the pipette 6 from the container, he/she unscrews the closure member 3 of the container. The rotation of the cover element 4 causes the push button 5 to rotate on account of the engagement between the material bridges 44 and tabs 56 disposed in the openings 49 between the material bridges 44. The rotation of the push button 5 allows its translational movement along the axis X-X by unscrewing the complementary thread 43 on the tabs 53 with respect to the thread 22 on the neck 21 of the container. Under the effect of the spring pressing against the shoulder of the container, the cover element 4 remains at a fixed height with respect to the container until the closure element 3 has been completely unscrewed. This translational movement of the push button 5 relative to the cover element 4 causes an increase in the volume of the chamber formed by the pump body 45 and the piston 54 such that a dose of product is sucked up into the pipette 6 since this pipette 6 is inserted into the neck and its free end 62 is positioned close to the base of the container in the product contained in the container. Moreover, a wiper may be held in the neck in order to wipe the pipette when the closure member 3 is removed from the container 2. According to one embodiment, the band 23 can act as wiper.

In Figure 6, the closure member 3 is separated from the container and the push button 5 is in the extended position corresponding to the position in which the push button 5 is located for example before the expulsion of a dose of product. The volume of the chamber formed by the pump body 45 and the piston 54 is then at a maximum. In this position, the free end of each tab 56 having the complementary thread 43 is positioned below the pump body 45, such that during the positioning of the closure member 3 on the container, the complementary thread 43 can engage with the thread 22 on the neck 21 of the container while the lower edge of the sleeve 41 of the cover element 4 is in contact with the shoulder of the container or, as the case may be, with the band 23.

Starting from the position shown in Figure 6, the user can exert a force F on the push button 5 by holding the cover element 4, as is shown in Figure 7. The push button 5 then slides in the cover element 4 and the volume of the chamber formed by the pump body 45 and the piston 54 decreases so as to expel a dose of product.

When the user releases the push button 5 when the latter is in the depressed position, the spring 7 pushes the push button 5 back such that the volume of the chamber formed by the pump body 45 and the piston 54 increases for example in order to suck up a dose of product if the free end 62 of the pipette 6 is dipped in the product.

When the user closes the container with the closure member 3 in order to achieve the closed position shown in Figure 5, in which the push button 5 is completely screwed on the neck 21, the rotation of the cover element 4 about the neck 21 allows the free end of each tab 56 of the push button 5 to be screwed onto the neck 21. Screwing causes the push button 5 to lower, allowing the expulsion of the product remaining in the pipette 6. In order to use the device again, all that the user needs to do is unscrew the closure member 3, as was described above.

The invention advantageously provides a simple mechanism for a pipette, which can be produced at low cost.

Throughout the description, the expression "having a" should be considered as being synonymous with "having at least one", unless specified to the contrary.

## Claims

1. Packaging and dispensing device (1) having a container (2) intended to contain a fluid product, and a closure member (3) for closing the container, the closure member having both an application pipette (6) designed to be inserted into the container in order to withdraw at least one dose of fluid product contained in the container, and also at least one pumping means, in particular a piston pump, connected to a push button (5) for sucking up or expelling a dose of product contained in the pipette, the device being **characterized in that** the push button has a complementary thread (43) that engages with a thread (22) on the container.

2. Device according to the preceding claim, **characterized in that** the portion of the push button having the complementary thread is formed by at least one tab (56) that extends from a bearing wall (51) of the push button in the direction of the container.

3. Device according to either of the preceding claims, **characterized in that** the closure member has a cover element (4) in which the push button is mounted so as to slide without rotating with respect to the cover element, such that the rotation of the cover element of the closure member relative to the container causes the axial translational movement of the push button relative to the cover element.

4. Device according to one of the preceding claims, **characterized in that** the material of which the push button is made is more rigid than the material of which the cover element is made.

5. Device according to one of the preceding claims, **characterized in that** the push button has a piston and the cover element has a pump body, the piston being mounted so as to slide and in a leaktight manner with respect to the pump body.

6. Device according to Claim 5, **characterized in that** the pump body and the cover element are made from the same material.

7. Device according to either of Claims 5 and 6, **characterized in that** the push button and the piston are made from the same material.

8. Device according to one of the preceding claims, **characterized in that** it has a spring (7) positioned between the push button and the cover element so as to exert a force that tends to move these two parts away from one another.

## Patentansprüche

1. Verpackungs- und Abgabevorrichtung (1), die einen Behälter (2) aufweist, der dazu vorgesehen ist, ein Fluidprodukt zu enthalten, und ein Verschließelement (3) zum Verschließen des Behälters, wobei das Verschließelement sowohl eine Applizierungspipette (6) aufweist, die dazu ausgelegt ist, in den Behälter eingeführt zu werden, um mindestens eine Dosis von Fluidprodukt, das in dem Behälter enthalten ist, aufzuziehen, als auch mindestens ein Pumpenelement, insbesondere eine Kolbenpumpe, das mit einer Drucktaste (5) verbunden ist, um eine Dosis von in der Pipette enthaltenem Produkt aufzusaugen oder auszustoßen, wobei die Vorrichtung **dadurch gekennzeichnet ist, dass** die Drucktaste ein komplementäres Gewinde (43) aufweist, das in ein Gewinde (22) an dem Behälter eingreift.

2. Vorrichtung dem vorangehenden Anspruch, **dadurch gekennzeichnet, dass** der Abschnitt der Drucktaste, der das komplementäre Gewinde aufweist, durch mindestens eine Lasche (56) gebildet wird, die sich von einer Lagerwand (51) der Drucktaste in der Richtung des Behälters erstreckt.

3. Vorrichtung nach einem der vorangehenden Ansprüche, **dadurch gekennzeichnet, dass** das Verschließelement ein Abdeckungselement (4) aufweist, in dem die Drucktaste montiert ist, sodass sie mit Bezug auf das Abdeckungselement ohne Drehung gleitet, sodass die Drehung des Abdeckungselements des Verschließelements relativ zu dem Behälter die axiale Übergangsbewegung der Drucktaste relativ zu dem Abdeckungselement verursacht.

4. Vorrichtung nach einem der vorangehenden Ansprüche, **dadurch gekennzeichnet, dass** das Material, aus dem die Drucktaste hergestellt ist, starrer als das Material ist, aus dem das Abdeckungselement hergestellt ist.

5. Vorrichtung nach einem der vorangehenden Ansprüche, **dadurch gekennzeichnet, dass** die Drucktaste einen Kolben aufweist und das Abdeckungselement ein Pumpengehäuse aufweist, wobei der Kolben so montiert ist, dass er gleitet und mit Bezug auf das Pumpengehäuse leckdicht ist.

6. Vorrichtung nach Anspruch 5, **dadurch gekennzeichnet, dass** das Pumpengehäuse und das Abdeckungselement aus demselben Material hergestellt sind.

7. Vorrichtung nach einem der Ansprüche 5 und 6, **dadurch gekennzeichnet, dass** die Drucktaste und der Kolben aus demselben Material hergestellt sind.

8. Vorrichtung nach einem der vorangehenden Ansprüche, **dadurch gekennzeichnet, dass** sie eine Feder (7) aufweist, die zwischen der Drucktaste und dem Abdeckungselement positioniert ist, um eine Kraft auszuüben, die dazu neigt, diese beiden Teile voneinander weg zu bewegen.

## Revendications

1. Dispositif (1) de conditionnement et de distribution comportant un récipient (2) destiné à contenir un produit fluide, et un organe de fermeture (3) pour fermer le récipient, l'organe de fermeture comportant d'une part une pipette d'application (6) configurée pour être insérée dans le récipient afin de permettre le prélèvement d'au moins une dose de produit fluide contenu dans le récipient, et d'autre part au moins un moyen de pompage, notamment une pompe à piston, liée à un bouton poussoir (5) permettant d'aspirer ou d'expulser une dose de produit contenu dans la pipette, le dispositif est **caractérisé en ce que** le bouton poussoir comporte un filetage complémentaire (43) coopérant avec un filetage (22) sur le récipient.

2. Dispositif selon la revendication précédente, **caractérisé en ce que** la portion du bouton poussoir comportant le filetage complémentaire est formée par au moins une languette (56) s'étendant d'une paroi d'appui (51) du bouton poussoir en direction du récipient.

3. Dispositif selon une des revendications précédentes, **caractérisé en ce que** l'organe de fermeture comporte un élément d'habillage (4) dans lequel le bouton poussoir est monté afin de coulisser sans rotation par rapport à l'élément d'habillage, de sorte que la rotation de l'élément d'habillage de l'organe de fermeture par rapport au récipient entraîne la translation axiale du bouton poussoir par rapport à l'élément d'habillage.

4. Dispositif selon une des revendications précédentes, **caractérisé en ce que** le matériau dans lequel est réalisé le bouton poussoir est plus rigide que le matériau dans lequel est réalisé l'élément d'habillage.

5. Dispositif selon une des revendications précédentes, **caractérisé en ce que** le bouton poussoir comporte un piston et l'élément d'habillage comporte un corps de pompe, le piston étant monté afin de coulisser et de manière étanche par rapport au corps de pompe.

6. Dispositif selon la revendication 5, **caractérisé en ce que** le corps de pompe et l'élément d'habillage sont réalisés à partir du même matériau.

7. Dispositif selon une des revendications 5 et 6, **caractérisé en ce que** le bouton poussoir et le piston sont réalisés à partir du même matériau.

8. Dispositif selon une des revendications précédentes, **caractérisé en ce qu'**il comporte un ressort (7) positionné entre le bouton poussoir et l'élément d'habillage afin d'exercer une force tendant à éloigner ces deux pièces l'une de l'autre.
